# EUROPEAN PATENT APPLICATION

(11) **EP 2 247 039 A1**
(43) Date of publication of application: **03.11.2010**
(21) Application number: 09706986.8
(22) Date of filing: 07.01.2009
(51) Int. Cl.: H04L 12/56

(54) **A CONTROL METHOD, SYSTEM, AND DEVICE FOR CIRCUIT DOMAIN FALLBACK**

(30) Priority: 24.01.2008 CN 200810004410
(71) Applicant: ZTE Corporation, Shenzhen, Guangdong 518057 (CN)
(72) Inventor: HU, Ying, Guangdong 518057 (CN); YU, Zhiming, Guangdong 518057 (CN); ZONG, Zaifeng, Guangdong 518057 (CN); YE, Minya, Guangdong 518057 (CN); WANG, Zhihai, Guangdong 518057 (CN)
(74) Representative: Prinz & Partner
(86) International application number: PCT/CN2009/070070
(87) International publication number: WO 2009/094916

(57) **Abstract**

The present invention discloses a method, system, and apparatus for controlling Circuit Switched, CS, fallback. The method comprises: a network element which got calling information of the present call in CS domain notifying a Mobility Management Entity, MME, of the calling information; the MME notifying the called User Equipment, UE, of the calling information; the called UE determining whether the call performs CS fallback according to whether the user answers the call or according to pre-configured CS fallback policy. By applying the present invention, the CS fallback of ongoing call can be controlled by the called user which is in EPS network, therefore the usability of the user's EPS network service is ensured, the satisfaction degree of the user is improved, and the useless occupancy of the GSM/UMTS network resources is reduced.

## Description

### Technical Field

The present invention relates to communication field, and in particular, to a method, system, and apparatus for controlling Circuit Switched fallback.

### Background of the Invention

In order to keep the compelling competition capabilities of the 3rd generation mobile communication system in the field of mobile communication, its network performance must be improved and the costs for network establishment and operation must be reduced.

Therefore, the standardization working group of the 3rd Generation Partnership Project (3GPP) is now dedicating to study the evolution of Packet Switched Core (PS Core) network and Universal Mobile Telecommunication System Terrestrial Radio Access Network (UTRAN), in order to enable the Evolved PS Core (EPC) network to provide higher transmission rate and shorter transmission delay, and support mobility management among Evolved UTRAN (E-UTRAN), GSM EDGE radio access network (GERAN), UTRAN, Wireless Local Area Network (WLAN) and other non-3GPP access networks, wherein GSM is the abbreviation of Global System for Mobile communications, and EDGE is the abbreviation of Enhanced Data Rate for GSM Evolution. This evolved mobile telecommunication system is called as Evolved Packet System (EPS).

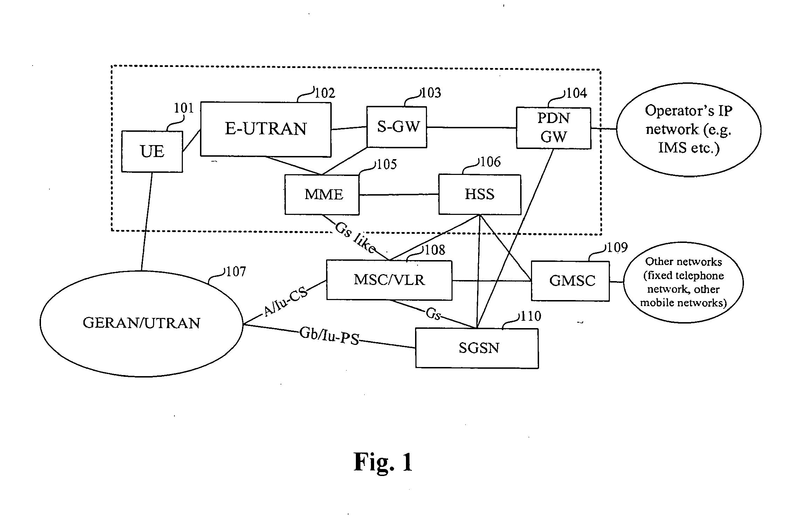

Fig.1 is an architecture diagram of EPS network according to related technology. The basic architecture of EPS is as shown in dashed block in FIG. 1. Each entity in FIG. 1 is described as follows:
User Equipment (UE) 101: a terminal capable of accessing two kinds of radio networks, is also called as dual-mode terminal. According to the capability of simultaneously accessing radio networks, the dual-mode terminal can also be divided into single radio channel access terminal and dual radio channel access terminal, wherein the former can only access one kind of radio network at a time; and the latter can access two kinds of radio access networks simultaneously.

E-UTRAN 102: an evolved radio access network, which can provide higher uplink/downlink rates with shorter transmission delay and more reliable radio transmission. E-UTRAN includes network element Evolved Node B (eNodeB), which provides radio resource for access of terminal.

Serving Gateway (S-GW) 103: a user-plane entity, and is responsible for the route processing of user plane data.

Packet Data Network Gateway (PDN GW or P-GW) 104: responsible for the gateway function of UE accessing a Packet Data Network (PDN), wherein both P-GW and S-GW may be implemented in one physical entity.

Mobility Management Entity (MME) 105: a control-plane entity and a server for temporarily storing subscription data, responsible for managing and storing UE context (e.g. UE/user ID, mobility management state, UE security parameter, etc.), and allocating a temporary ID for the UE, and authenticating the UE when the UE currently camps in a tracking area or network managed by it.

Relating to the present application, UE has three states in the EPS network: detached state, idle state and active state, wherein the detached state means that the UE does not access EPS network at present; the idle state means that the UE has accessed EPS network at present, the signaling connection between the UE and the MME, S1-MME signaling connection between the eNodeB and the MME, S1-U user-plane connection between the eNodeB and the Serving GW have been released, and the UE does not have ongoing Internet Protocol (IP) service at this moment; the active state means that the UE has accessed EPS network at present, the signaling connection exists between the UE and the MME, the S1-MME signaling connection exists between the eNodeB and the MME, the S1-U user-plane connection exists between the eNodeB and the Serving GW, and the UE may have ongoing IP service.

Home Subscriber Server (HSS) 106: comprises the function of Home Location Register (HLR), and stores basic data and service data of the subscriber.

IP Multimedia Core Network Subsystem (IMS): an IP-based network architecture put forth by 3GPP, which establishes an open and flexible service environment, supports multimedia applications and provides rich multimedia services for users. IMS is IP-based telecommunication network architecture and is irrelevant with access technology. In addition to providing services for the EPS, General Packet Radio Service (GPRS), WLAN and other packet access networks, it also provides services for the GSM, UMTS and other mobile cellular networks.

GERAN/UTRAN 107: the radio access network of legacy GSM/UMTS network.

Mobile Switching Center (MSC)/Visitor Location Register (VLR) 108: the two logically separated units, MSC and VLR, are typically implemented in one physical node in practical implementation and network deployment, the MSC/VLR may also be a new function entity MSC Server since R4 (3GPP Release 4) stage, all of these are uniformly denoted with MSC/VLR in the present invention.

Gateway Mobile Switching Center (GMSC) 109 is included.

Serving GPRS Support Node (SGSN) 110: a control network element of GPRS network, and its main roles are recording location information of the UE, and forwarding mobile packet data between a UE and a Gateway GPRS Supporting Node (GGSN).

When a UE accesses a GSM/UMTS network, the basic voice services and supplementary services based on voice service of the user are provided via Circuit Switched (CS) domain. The MSC/VLR and GMSC in Fig.1 are CS domain network elements. The user can perform voice call service with users in the local network or other networks (e.g. fixed telephone network, and other mobile networks) via CS domain. IP services are provided to the users via Packet Switch (PS) domain. The SGSN in Fig.1 is a PS domain network element. The UE accesses the Packet Data Network (PDN) via PS domain. The operator's IP services network in Fig. 1 is a PDN.

In the prior art, the interface between MSC/VLR and SGSN is called as Gs interface. Gs interface is used for establishment of Gs association between MSC/VLR and SGSN (i.e., the SGSN stores the VLR number and the VLR stores the SGSN number), and the MSC/VLR finds the UE of the called user by paging via PS domain in the case Gs association is established.

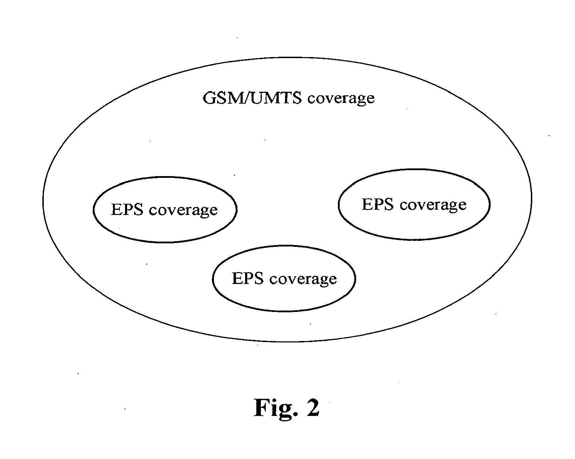

When UE accesses EPS network, user's basic voice services and supplementary services based on the voice service are controlled by IMS. EPS system itself can not provide or control voice call services, and can only provide transmission for IP data. Fig.2 is a schematic diagram of specific coverage situation of EPS network and GSM/UMTS network according to related technology. As shown in Fig.2, during EPS network deployment process, without deploying or unwilling to deploy IMS, some operators only deploy EPS networks to provide high-rate IP data services for the user in the key or hot spots where the GSM/UMTS network is also available. In this scenario, voice call services are desired to be provided and they can only be provided by the CS domain of the fully covered GSM/UMTS network.

At this time, for the dual-mode terminal with single radio channel accessing capability, the user can not perform voice call service when it accesses EPS network. In order to ensure that the user can make a voice call, a simple solution which also is the only one supported by 3GPP currently is that when the user performs a voice call, the UE is switched from accessing via an EPS network to via a GSM/UMTS network, and then the voice service is implemented at CS domain of the GSM/UMTS network. The ongoing IP service of the user in the EPS network is handover to the PS domain of GSM/UMTS networks. If the ongoing IP service is not able to be handover to the PS domain of GSM/UMTS, it will be suspended or released in the EPS network. This is called Circuit Switched fallback (CS fallback, CSFB).

The current method for realizing CS fallback is roughly as follows: an interface similar to Gs interface which is called Gs like (as shown in Fig.1) is introduced between MME and MSC/VLR. The newly introduced interface between MME and MSCNLR may also be any extension based on Gs interface principle, for example, SGs interface etc., all of which are uniformly denoted with Gs interface in the present invention. When the UE is powered on and accesses an EPS network, the Gs interface is used for the establishment of Gs association between MME and MSC/VLR (storing the VLR number or address in the MME, and storing the MME number or address in the VLR). The association between MME and MSC/VLR may also be any extension based on Gs association principle, for example, SGs association or Gs like association, all of which are uniformly denoted with Gs association. Subsequently, when the user moves around within the EPS network, the latest location information of the user will be updated in MME. If an MME change has occurred, the MME information stored in the VLR will also be updated in time, ensuring that the MME information stored in the VLR is correct.

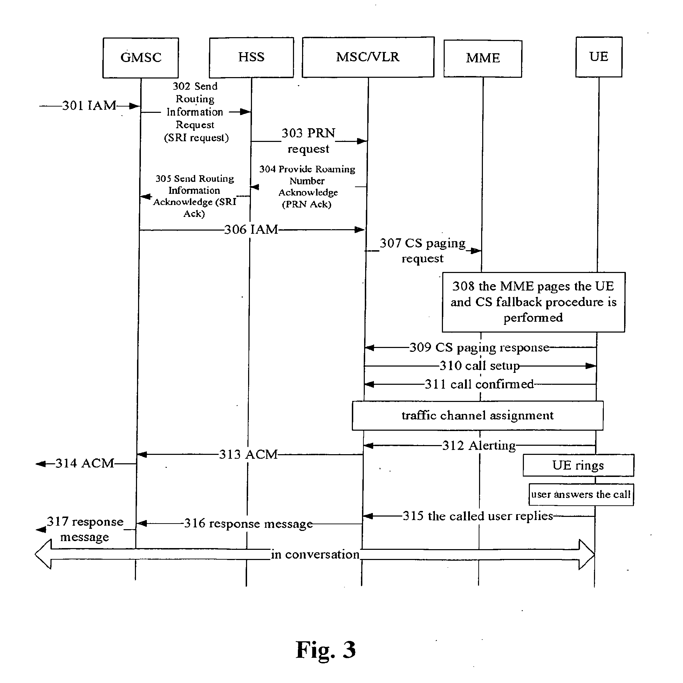

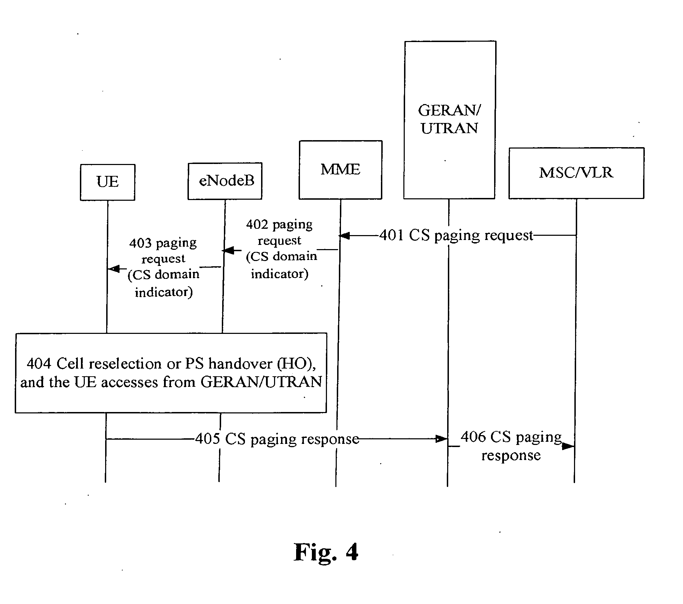

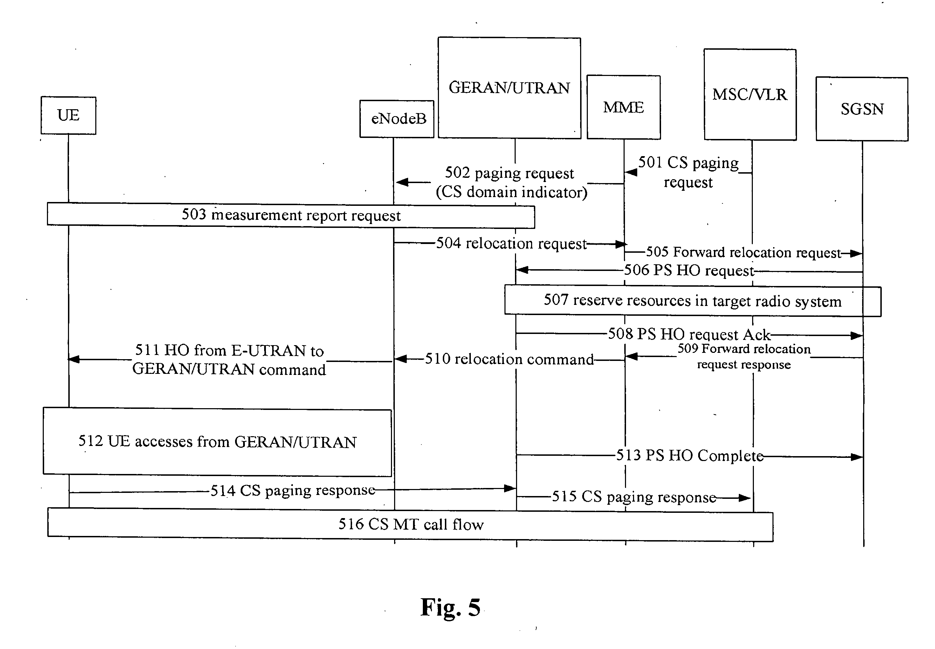

When a voice call is performed, if the called UE accesses from the EPS network, MSC/VLR sends a CS paging message to the EPS network via Gs interface after receiving an incoming call request, then the EPS network performs CS fallback upon receipt of the CS paging request message. Fig.3 is a flowchart of the whole signaling message according to related technology when the UE is a called terminal and it is in EPS network. As shown in Fig.3, the whole flow when the UE is a called terminal and it is EPS network comprises 301-307 as follows:
301, the UE accesses EPS network; a Gs association has been established between MME and MSC/VLR; both MME and MSC/VLR have registration information of the UE. The user of the UE has a call and the user is a called user. GMSC of the GSM/UMTS network where the UE is located receives Initial Address Message, IAM, (i.e., an incoming call request). The calling party of the incoming call request can be any kind of user, such as fixed-network user, mobile user and so on. The message includes the information of the present call, such as the calling number (the number of the caller), service type and so on;
302, the GMSC analyzes the received Initial Address Message, and retrieves routing information from the HSS of the called number, wherein the calling number and service type information are included in the request message;
303, the HSS sends a Provide Roaming Number request (PRN request) message to the VLR in which the UE is located to retrieve the roaming number;
304, the VLR allocates a roaming number for the UE, and sends a Provide Roaming Number response message to the HSS. The response message includes the allocated roaming number;
305, the HSS sends routing information response to the GMSC. The response includes the obtained roaming number;
306, the GMSC analyzes the roaming number, and routes the call to the MSC/VLR. The MSC/VLR receives the Initial Address Message (i.e., incoming call request) of the call. The Initial Address Message includes the information of the present call (calling number, and service type, and so on);
307, upon receiving the incoming call request, the MSC/VLR starts to page the UE of the called user. According to the Gs association information etc. stored in the VLR, the MSCNLR sends a CS paging message (IMSI, VLR TMSI, and Location Information) to the MME;
308, upon receiving the CS paging request message sent by the MSC/VLR, the MME starts to page the UE, and the CS fallback procedure is performed. In the procedure, if the UE has ongoing service(s), PS handover will be performed (or the ongoing service(s) will be suspended/released etc. in the EPS network), and the UE access from GERAN/UTRAN. In the prior art, the specific CS fallback method and procedure are as shown in Fig.4 or Fig.5;
309, after the CS fallback procedure is completed, the UE accesses GSM/UMTS network and sends a CS paging response message to the MSCNLR. The MSCNLR starts a call establishment procedure after receiving the CS paging response message sent by the UE;
310, the MSC sends a call setup message to the UE;
311, the UE sends a Call confirmed message to the MSC. Afterwards, the traffic channel is established among the MSC, the radio access network and the UE;
312, the called user is being alerted, the UE sends an Alerting message to the MSC;
313, the MSC sends an Address Complete Message (ACM) to the GMSC;314, the GMSC forwards the Address Complete Message to the calling side;
315, the called user answers the call, and the UE sends a response message to the MSC;
316, the MSC sends the response message to the GMSC;
317, the GMSC forwards the response message to the calling side, and then both parties of the call start a conversation.

In the prior art, there are two methods which may be used for paging the UE and performing call fallback to CS domain:
Fig.4 is a signaling flow of the implementing method for CS fallback of Mobile Terminating (MT) call in the prior art. As shown in Fig.4, the paging request message from the CS domain is sent all the way to the UE of the called user via the MME and the eNodeB (401-403). Upon receiving the paging message, the UE starts to perform CS fallback. If the UE is in idle state at present (has no ongoing IP service at this time), the UE will perform cell reselection, access from the GSM/UMTS network, and perform CS MT call flow in the CS domain of the GSM/UMTS network (404). If the UE is in active state (may have ongoing IP services at this time), the ongoing IP services will be handed over to the PS domain of the GSM/UMTS network, and the UE accesses from the GSM/UMTS network, and performs CS MT call flow in the CS domain of the GSM/UMTS network (404). Subsequently, the UE returns a CS paging response to the MSC/VLR via the GSM/UMTS network (405-406).
Fig.5 is another signaling flow of the implementing method for CS fallback of MT in the prior art. As shown in Fig. 5, the MSC/VLR receives the incoming request, and sends the CS paging request message to the MME via Gs interface. After receiving the paging request message, if the MME determines that the UE is in active state (may have ongoing IP services at present), the MME forwards the CS paging request message to the serving eNodeB(s) of the UE. After the UE and the eNodeB etc. complete the measurement of the radio signal, the eNodeB sends a message to the MME to initiate the handover of the current ongoing IP services of the user to the GSM/UMTS PS domain (or suspended in the EPS network). When the UE switches to access from the GSM/UMTS network, the CS MT call flow is performed in the CS domain of the GSM/UMTS network. If the UE is in idle state at present (has no ongoing IP service currently), the MME sends the CS paging request to one or more serving eNodeBs of the UE. Each eNodeB, which receives the request, sends the CS paging message to the UE. The UE receives the paging message, sends message to the eNodeB which serve the area where the UE is located at present to establish radio connection, etc., and then the UE enters the active state. Subsequently, the UE switches from accessing from the EPS network to accessing from the GSM/UMTS network, and the CS MT call flow is performed in the CS domain of the GSM/UMTS network. The flow comprises 501-516 as follows:
   501, the MSC/VLR sends a CS paging request to the MME;
   502, the MME sends paging request (CS domain paging indication) to the eNodeB(s);
   503, the eNodeB may solicit a measurement report from the UE to determine to which GERAN/UTRAN cell the PS handover will be performed;
   504, the eNodeB sends a relocation request to the MME;
   505, the MME sends a Forward Relocation Request to the SGSN;
   506, the SGSN sends a PS handover request to the GERAN/UTRAN;
   507, resources are reserved in target radio system, the GERAN/UTRAN;
   508, the GERAN/UTRAN sends a PS handover request response to the SGSN;
   509, the SGSN sends a Forward Relocation Request response to the MME;
   510, the MME sends a relocation command to the eNodeB;
   511, the eNodeB sends to the UE the handover command which instructs the UE to tune from the E-UTRAN to the GERAN/UTRAN, and access from the GERAN/UTRAN;
   512, the UE accesses from the GERAN/UTRAN;
   513, the GERAN/UTRAN sends a PS handover completion operation to the SGSN;
   514, the UE sends a CS paging response message to the GERAN/UTRAN;
   515, the GERAN/UTRAN sends the CS paging response message to the MSC/VLR;
   516, the UE interacts with the MSC to implement CS MT call flow.

As mentioned above, in the prior art, when the UE is the terminal of the called user and in the EPS network, the MSCNLR can only page the UE via the EPS network, but can not send the calling information such as calling number and service type to the UE. Until the UE completes CS fallback, accesses the GSM/UMTS network, and performs CS domain signaling interaction with the MSCNLR etc., the MSCNLR can provide the calling information (calling number and service type etc.) to the UE. Then, the called user can determine, when the UE rings, whether to answer the current call or not, according to the calling information (calling number and service type etc.) displayed on the terminal.

This means that when the UE is in EPS network, no matter whether the user of the UE has ongoing IP service(s) at present or not, once a CS calling occurs, the UE must switch to accessing the GSM/UMTS network, and the ongoing IP services of the user in EPS network must be switched to the GSM/UMTS PS domain, or suspended and may be stopped, all of this will result in the ongoing IP service(s) being interrupted to a certain extent.

As shown in aforementioned descriptions, current CS fallback technology has the following flaws: the called user has no choice to decide whether the call performs CS fallback; during a terminating call, if the user has no ongoing IP service in EPS network, the user feels nothing when the UE falls back to the GSM/UMTS CS domain for voice call. However, if the user has ongoing IP services in EPS network, the ongoing services (e.g. the user's favorite game, video etc.) will be influenced because of some calls that the user do not want to answer at present (e.g. advertisement, nuisance call etc.). This is obviously against the will of the user, which will lower the level of user experience.

In order to provide the user with the choice of whether the call performs CS fallback, when the UE is in EPS network, the MSCNLR should be able to provide the calling information including such as calling number and service type to the UE via the EPS network. If the user decides to answer the call, the CS fallback is performed; otherwise the CS fallback is not performed. For this reason, the following problems should be solved: how the MSCNLR transmits the calling information to the EPS network; how to transmit the calling information to the UE in the EPS network; and how to transmit the selection information to the EPS network, wherein the selection information indicates the user's decision of whether the call performs CS fallback. However, these problems can not be solved in the prior art, because existing Gs interface can not transmit the calling information, and the paging response message does not include the selection result of the user either.

Therefore, there is no solution available which can enable the user to make a choice on whether the call performs the CS fallback yet.

### Summary of the Invention

Given the problem that the user is not able to determine whether the call performs the CS fallback according to the related technology, that is to say, CS fallback can only be performed enforcedly, the present invention aims at providing a control mechanism for CS fallback to solve the above-mentioned problem.

According to one aspect of the present invention, the present invention provides a method for controlling CS fallback which is used in a scenario that a calling user equipment (UE) initiates a call to a called UE, wherein the called UE is in an Evolved Packet domain System (EPS) network.

The method for controlling CS fallback according to the present invention comprises:
network element which got the calling information of the present call in the Circuit Switched (CS) domain notifying a Mobility Management Entity(MME), of the calling information; the MME notifying the called User Equipment(UE) of the calling information; the called UE determining whether the call performs the CS fallback according to whether the user answers the call or according to preconfigured CS fallback policy.

On one hand, in the case that the network element is a Mobile Switching Center/Visitor Location Register (MSC/VLR), the MSCNLR notifies the MME of the calling information by including the calling information in a CS paging message of Gs interface.

On another hand, in the case that the network element is a Home Subscriber Server (HSS) , the HSS notifies the MME of the calling information by including the calling information in interaction information between the HSS and the MME.

In addition, in the case that the called UE determines the call to perform the CS fallback, the method further comprises: the called UE sending indication information for allowing the call to perform CS fallback to a fallback trigger network element which can trigger CS fallback, so that the CS fallback can be performed, wherein the fallback trigger network element comprises MME, Evolved Node B (eNodeB) .

On another hand, in the case that the called UE determines that the call does not perform CS fallback, the method further comprises: the called UE sending indication for the call not performing CS fallback to the MME; the.MME returning the reason that the called UE does not answer the call to the network element, or not returning any information to the network element.

In the case that whether the call performs CS fallback is determined according to CS fallback policy, the user will be reminded of the calling information in the ways of ringing and so on.

Added to these, in the case that the called UE determines that the call does not perform CS fallback according to the pre-configured CS fallback policy, the method may further comprise: the called UE prompting the user to select whether the call performs CS fallback. Furthermore, the called UE may directly prompt the user whether the call performs the CS fallback, instead of determining according to the CS fallback policy.

At this time, in the case that the user selects to the call perform the CS fallback, the method further comprises: after the CS fallback is completed, the called UE not prompting the user to answer the call.

In addition, the calling information may comprise: the calling UE number, service type of the call.

According to another aspect of the present invention, the present invention provides a method for controlling CS fallback which is used in a scenario that a calling User Equipment (UE) initiates a call to a called UE, wherein the called UE is in an Evolved Packet domain System (EPS) network.

The method for controlling CS fallback according to the present invention comprises: a network element which got the calling information of the present call in Circuit Switched(CS) domain notifying a Mobility Management Entity(MME), of the calling information; the MME determining whether the call performs CS fallback according to a pre-configured CS fallback policy; the MME sending, to the called User Equipment (UE), the calling information and indication information of whether the present call performs CS fallback.

On one hand, in the case that the network element is a Mobile Switching Center/Visitor Location Register (MSC/VLR), the MSCNLR notifies the MME of the calling information by including the calling information in a CS paging message of Gs interface.

On another hand, in the case that the network element is a Home Subscriber Server (HSS), the HSS notifies the MME of the calling information by including the calling information in interaction information between the HSS and the MME.

In addition, the calling information comprises: the calling UE number, service type of the call.

According to still another aspect of the present invention, the present invention provides a system for controlling CS fallback which is used in a scenario that a calling User Equipment (UE) initiates a call to a called UE, wherein the called UE is in an Evolved Packet domain System (EPS) network.

The system for controlling CS fallback according to the present invention comprises a Mobile Switching Center/Visitor Location Register ( MSC/VLR), configured to notify a Mobility Management Entity(MME), of the calling information by including calling information of the present call in a Circuit Switched (CS) domain paging message of Gs interface; a Home Subscriber Server(HSS), configured to notify the MME of the calling information by including the calling information in interaction information between the HSS and the MME; the MME, configured to notify the called User Equipment (UE) of the calling information, to determine whether the call performs CS fallback according to a pre-configured CS fallback policy, and to send indication information of whether the present call performs CS fallback to the called UE; or to determine whether to perform CS fallback according to an indication from the called UE of whether the call performs CS fallback; and the called UE, configured to determine, in the case that the MME does not determine whether the call performs the CS fallback, whether the call performs CS fallback according to CS fallback policy or according to whether the user of the called UE answers the call.

Wherein, the CS fallback policy may be set in the MME and/or the called UE.

According to still another aspect of the present invention, the present invention provides an apparatus for controlling CS fallback which is used in a scenario that a calling User Equipment (UE) initiates a call to a called UE which is in an Evolved Packet domain System (EPS) network.

The apparatus for controlling CS fallback according to the present invention comprises a forwarding module, configured to notify a Mobility Management Entity (MME) , of calling information of the present call, and forward the calling information from the MME to the called UE; a CS fallback decision-making module in which a CS fallback policy is set, configured to determine whether the call performs CS fallback according to the CS fallback policy or according to whether the user of the called UE answers the call; a CS fallback executing module, configured to execute CS fallback according to the decision of the CS fallback decision-making module.

Wherein, the forwarding module may be located in network element which got the calling information and/or in the MME. Furthermore, the network element comprises the MSCNLR and/or the HSS.

In addition, the CS fallback decision-making module is located in the called UE and/or the MME.

By applying the solution of the present invention, the user of the called UE is able to control whether to perform CS fallback for the ongoing call when the called UE is in EPS network; the problem of CS fallback being performed enforcedly in related technology is solved, therefore the usability of the EPS network service is ensured, the satisfaction degree of the user is improved, and the useless occupancy of GSM/UMTS network resources is reduced.

### Brief Description of Drawings

The drawings illustrated here provide a further understanding of the present invention and form a part of the present application. The exemplary embodiments and the description thereof are used to explain the present invention and without unduly limiting the scope of the present invention, wherein:
Fig.1 is an architecture diagram of the EPS network system according to related technology;
Fig.2 is a schematic diagram of specific coverage situation of the EPS network and the GSM/UMTS network according to related technology;
Fig.3 is a flowchart of the whole signaling message according to related technology when the UE of the called user is in EPS network;
Fig.4 is a signaling flow of the implementing method of CS fallback of Mobile Terminating call in the prior art, wherein, when the UE is in active state in EPS network, the CS paging message is transmitted all the way from the MSCNLR to the UE;
Fig.5 is another signaling flow of the implementing method of CS fallback of Mobile Terminating call in the prior art, wherein, when the UE is in active state in EPS network, the CS paging message is transmitted all the way from the MSC/VLR to the eNodeB, as soon as receiving the CS paging message, the eNodeB triggers CS fallback procedure;
Fig.6 is a flowchart of the method for controlling CS fallback according to the first method embodiment of the present invention;
Fig.7 is a signaling flowchart of signaling transmission process in the case that the MSC/VLR is used to notify the calling information in the method according to the first method embodiment of the present invention;
Fig.8 is a flowchart when the UE determines the call performs CS fallback in the case that the MSC/VLR is used to notify the calling information in the method according to the first method embodiment of the present invention;
Fig.9 is a flowchart when the UE determines that the call dose not perform CS fallback in the case that the MSC/VLR is used to notify the calling information in the method according to the first method embodiment of the present invention;
Fig.10 is a signaling flowchart that the MME returns response message directly to the HSS when the UE is in detached state or idle state in the case that the HSS is used to notify the calling information in the method according to the first method embodiment of the present invention;
Fig.11 is a signaling flowchart that the MME forwards corresponding message including the calling information to the UE, and the UE performs CS fallback, when the UE is in active state or idle state, in the case that the HSS is used to notify the calling information in the method according to the first method embodiment of the present invention;
Fig.12 is a signaling flowchart that the UE determines that the call does not perform CS fallback when the UE is in active state or idle state in the case that the HSS is used to notify the calling information in the method according to the first method embodiment of the present invention;
Fig.13 is a flowchart of the method for controlling CS fallback according to the second method embodiment of the present invention;
Fig.14 is a signaling flowchart that the MME determines whether the call performs CS fallback or not in the method according to the second method embodiment of the present invention;
Fig.15 is a detailed signaling processing flowchart that the MME determines the call performs CS fallback in the method according to the second method embodiment of the present invention;
Fig.16 is a detailed signaling processing flowchart that the MME determines that the call does not perform CS fallback in the method according to the second method embodiment of the present invention; and
Fig.17 is a block diagram of the apparatus for controlling CS fallback according to an apparatus embodiment of the present invention.

### Detailed Description

### General description of functions

Considering the related technology, if CS fallback is required to be controlled, the calling information will need to be transmitted from the CS domain network element, which has obtained the calling information including calling number and service type and so on, to the EPS network and to the UE, and then whether the call performs CS fallback can be determined by the user, or according to the policy pre-configured by the user.

Therefore, the present invention provides an improved controlling mechanism for CS fallback. Through modifying the existing CS paging message of Gs interface between MSC/VLR and MME, or through modifying the interface information between HSS and MME, or through adding information between HSS and MME, the calling information including the calling number and the service type and so on is transmitted to the MME, and then the MME forwards the calling information to the UE.

At this time, whether the call performs CS fallback is determined by performing signaling interaction process between the MME and the UE.

Whether the call performs CS fallback can be determined by the following two methods:
(1) Determined on the UE. The calling information is prompted to the user, and then whether the call performs CS fallback is determined according to the operation whether the user answers the call or not; or whether the call performs CS fallback is determined according to CS fallback policy pre-configured by the user in the UE, whether the call performs CS fallback is determined by the UE.
(2) Determined in the network. CS fallback policy is stored in the MME in the manner such as user pre-configured. That is to say, when the MME receives the calling information of the present call from MSCNLR or HSS, the MME determines whether the call performs CS fallback according to the pre-configured policy, and notifies, through signaling message, the UE of the information such as the calling number and service type of the present call and the information whether the call performs CS fallback.

What needs to be explained is that the embodiments of the present invention and the features of the embodiments can be combined with each other if there is no conflict. The present invention will be detailed hereafter with reference to the drawings. Although logic sequence is suggested in the drawings or in the descriptions, under certain circumstances, the flow shown or described can be executed in a sequence different with the sequence suggested.

### The first method embodiment

According to an embodiment of the present invention, a method for controlling CS fallback which is used in a scenario that a calling UE initiates a call to a called UE which is in an EPS network is provided.

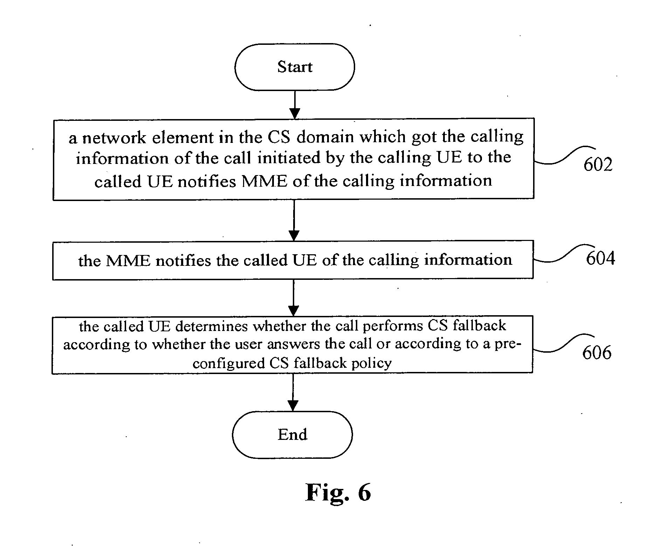

Fig.6 is a flowchart of the method for controlling CS fallback according to the first method embodiment of the present invention. As shown in Fig.6, the method for controlling CS fallback according to the embodiment comprises 602-606 as follows:
602, a network element in the CS domain which got the calling information of the call initiated by the calling UE to the called UE notifies the MME of the calling information;
604, the MME notifies the called UE of the calling information;
606, the called UE determines whether the call performs CS fallback according to whether the user answers the call or according to a pre-configured CS fallback policy.

In one aspect, in the case that the network element is a MSCNLR, the MSCNLR notifies the MME of the calling information by including the calling information in a CS paging message of Gs interface.

In another aspect, in the case that the network element is a HSS, the HSS notifies the MME of the calling information by including the calling information in interaction information between the HSS and the MME.

In addition, in the case that the called UE determines that the call performs CS fallback, the method further comprises: the called UE sends indication information for allowing the call to perform CS fallback to a fallback trigger network element which can trigger CS fallback, so that CS fallback can be performed, wherein the fallback trigger network element comprises the MME, eNodeB.

In a further aspect, in the case that the called UE determines that the call does not perform CS fallback, the method further comprises: the called UE sends indication for not performing CS fallback to the MME; the MME returns the reason why the called UE does not answer the call to the network element, or does not return any information to the network element.

Besides, in the case that the called UE determines that the call does not perform CS fallback according to the pre-configured CS fallback policy, the method may further comprise: the called UE prompts the user to determine whether the call performs CS fallback. Furthermore, it may directly prompt the user whether the call performs CS fallback, instead of determining according to CS fallback policy.

Furthermore, in the case that the user selects that the call performs the CS fallback according to the prompt, the method further comprises: after CS fallback is completed, the called UE does not prompt the user to answer the call. That is to say, the method avoids prompting the user twice in a single call procedure.

In addition, the calling information may comprise: calling UE number, service type of the call.

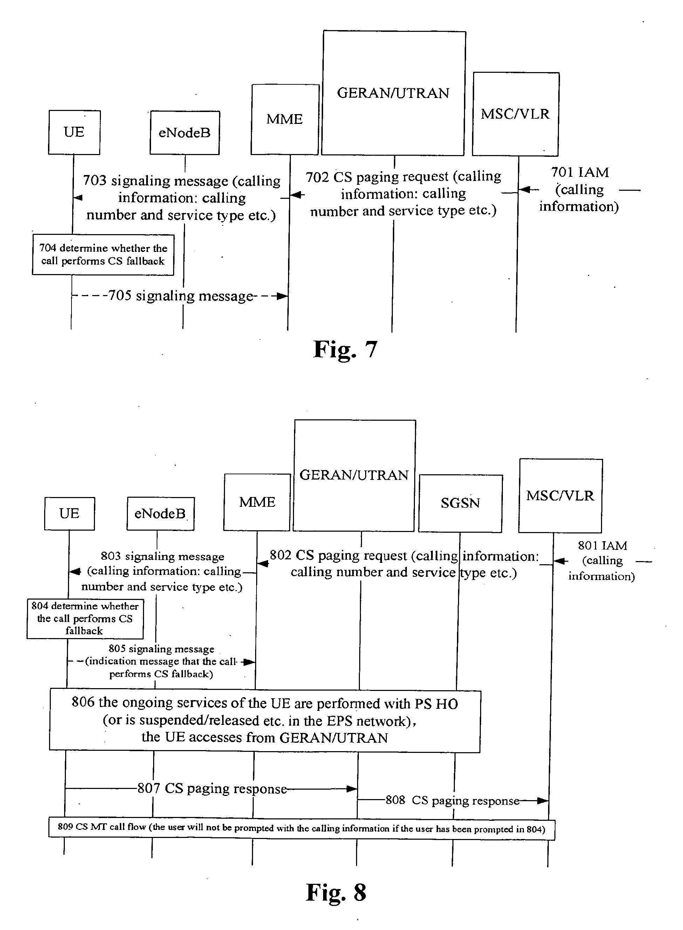

Fig.7, Fig.8 and Fig.9 are the signaling flows when the MSC/VLR is used to notify the calling information and the UE determines whether the call performs CS fallback. Two methods may be used for determining whether the call performs CS fallback on the UE: the first method, the UE reminds the called user of the information of the present call, and determines according to the operation of whether the user answers the call; the second method, the UE determines whether the call performs CS fallback according to the CS fallback policy pre-configured in the UE by the user.

Fig.7 shows the signaling flow of transmitting the calling information (calling number and service type) from the MSC/VLR to the MME, and transmitting, between the MME and the UE, the calling information and the information for whether the call performs CS fallback. As shown in Fig.7, the flow comprises 701-705 as follows:
701, the UE accesses the EPS network; Gs association has been established between the MME and the MSC/VLR. The user of the UE has a call, and the user is a called user. The MSC/VLR receives an Initial Address Message (namely, incoming call request) of the call, wherein the initial address message includes the calling information (calling number, service type, and so on). The calling side of the incoming call request can be any kind of user such as a fixed-network user, mobile user and so on;
702, the MSC/VLR receives the incoming call request, and starts to page the UE. According to the Gs association information stored in the VLR, the MSC/VLR sends a CS paging request message to the MME. New parameters need to be added in the CS paging request message to indicate the present call information: calling number and service type;
703, the MME receives the CS paging request message, and transmits the present calling information (calling number and service type) to the UE via a related signaling message. The transmission mode can be newly adding a dedicated singling message, or adding new parameters in existing signaling message (e.g. the paging message and so on);
704, the UE receives the related information of the present call. Two specific implementing methods can be used to determine whether the call performs CS fallback:
   The first method: determining according to whether the user answers the call. Upon receiving
   the message from the MME, the UE prompts the user and waits for the user to answer the call, if the user answers the call, the UE generates indication information for performing CS fallback upon the UE receives the operation information from the user; otherwise, the UE considers that the user does not want to answer the present call (including refusal and no-response etc.), and generates indication information for not performing CS fallback.

The second method: determining according to the CS fallback policy pre-configured by the user in the UE. Upon receiving the message from the MME, the UE determines whether the call performs CS fallback according to the CS fallback policy stored in the UE and the present call information. If the present call satisfies the fallback policy pre-configured by the user, the UE generates the indication information which indicates the call performs CS fallback; otherwise, the UE generates the indication information for not performing CS fallback, and prompts the user of the present call information. In this method, when the present call does not satisfy the fallback policy pre-configured by the user, it can be realized in the following way: the UE prompts the user of the present call information, and then makes a decision according to the operation of the user, namely, the first implementing method.

705, the UE transmits the information whether the call performs CS fallback to the MME according to the decision result of 704. The indication information whether the call performs CS fallback may be transmitted via newly adding a dedicated singling message, or adding new parameters in existing signaling message.

Fig.8 is a signaling flow when the user determines the call performs CS fallback in the case that the MSC/VLR is used to notify the calling information. The drawing and the flow description thereafter show how the user determines the call performs CS fallback and the flow of fallback and mobile terminating call procedure by using the present invention. The flow mainly comprises 801-809 as follows:
801-805 are the same as the above-mentioned 701-705, and thus will not be reiterated here again;
806, the UE or MME or eNodeB triggers the CS fallback flow, and performs the fallback according to CS fallback method (e.g. the CS fallback methods as shown in Fig.4 and Fig.5), after the fallback is completed, the UE accesses the GERAN/UTRAN network. If the eNodeB or the MME triggers the CS fallback flow, the UE is required to send message to the eNodeB and the MME in 805 to notify the information that CS fallback is needed, otherwise, the UE may not send message to the eNodeB and the MME;
807, the UE sends a message to the GERAN/UTRAN, wherein a CS paging response message is included in the message;
808, the GERAN/UTRAN sends a message to the MSCNLR, and the CS paging response message is included in this message;
809, the MSC/VLR starts to perform CS mobile terminating call flow after receiving the CS paging response message. What is different from the CS mobile terminating call flow in the prior art is that the UE does not prompt the user any more if the UE judges that the user has been prompted already in 804, for avoiding that the user is prompted twice in one call procedure.

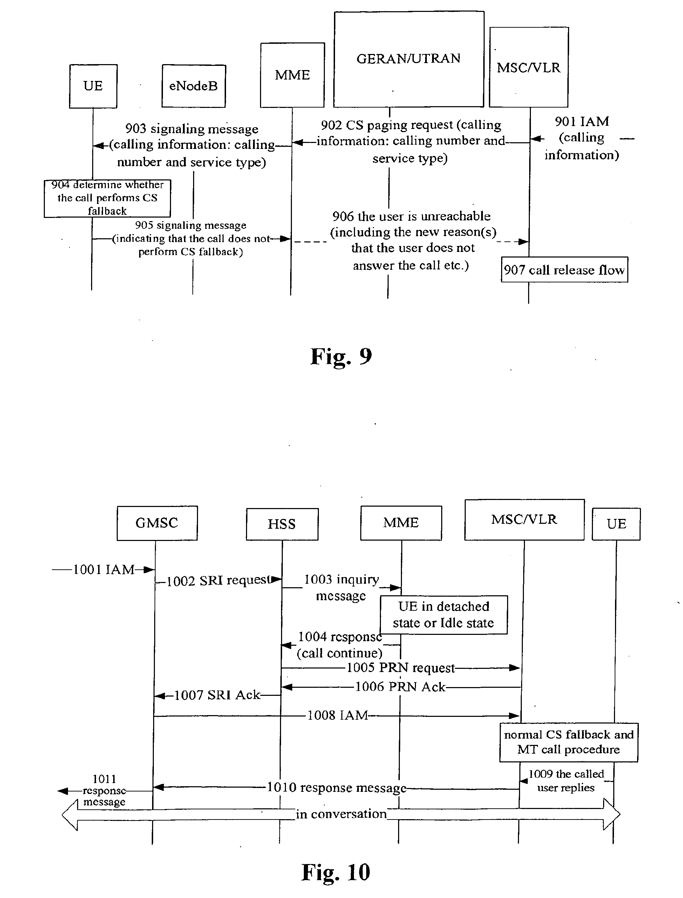

Fig.9 is a signaling flow when the user determines that the call does not perform CS fallback in the case that the MSC/VLR is used to notify the calling information. The drawing and the flow description thereafter show how the user determines the call performs CS fallback and the flow of fallback and mobile terminating call procedure by using the present invention. The flow mainly comprises 901-907 as follows:
901-905 are same to the above-mentioned 701-705, and thus will not be described here any more;
906, the MME sends a message to the MSC/VLR. The message may be an existing message of Gs interface "the user is unreachable" including a newly added reason indicating that the user does not want to answer the present call, or may be a new message indicating that CS fallback is rejected and the call will be released. Or the MME does not send any message to the MSC/VLR and the network element releases the call after a certain amount of time has passed;
907, the MSC/VLR receives the message, and starts to perform call release flow.

Fig.10, Fig.11, and Fig.12 are the signaling flowchart when the HSS is used to notify the calling information and whether the call performs CS fallback is determined in the UE.
Fig.10 shows the signaling flow when the UE is in detached state or idle state and the MME returns response message directly to the HSS. As shown in Fig.10, the flow comprises 1001-1008 as follows:
1001-1002, the GMSC receives an Initial Address Message (namely, incoming call request), and retrieves routing information from HSS. The request message at present has already included the information of calling number and service type.

The calling party of the incoming call request can be any kind of user such as a fixed-network user, mobile user and so on.
1003, the HSS checks that the user has registration or subscription information in GSM/UMTS CS and EPS network, and sends inquiry message to MME, wherein the inquiry message includes the calling information of calling number and service type and so on.
1004, the MME judges the UE is in detached state, or in idle state and the policy of the idle state is to allow to perform CS fallback. The MME sends response message directly to the HSS, and the response message includes the information that the call is allowed.
1005-1007, after receiving the response message, the HSS obtains a roaming number from the VLR in which the UE is located, and sends the roaming number to the GMSC.
1008-1011, the GMSC analyzes the roaming number, and routes the call to the MSCNLR. Subsequently, the call is established according to the prior art as shown in Fig.3.

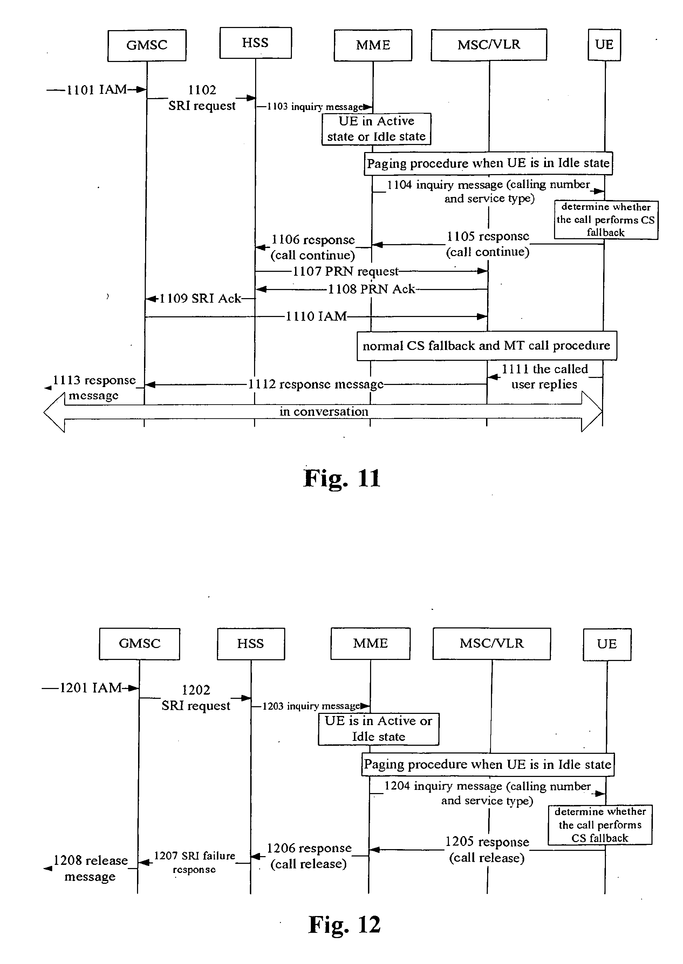

Fig.11 shows the signaling flow that the MME forwards corresponding message of the call to the UE, the user answers the call or determines the call performs CS fallback according to the pre-configured policy, when the UE is in the active state or idle state. As shown in Fig.11, the flow comprises 1101-1113 as follows:
1101-1102, the GMSC receives an Initial Address Message (namely, incoming call request), and retrieves routing information from HSS. The request message at present has already included the calling number and the service type information;
What needs to be explained is that the calling side of the incoming call request may be any kind of user such as fixed-network user, mobile user and so on;
1103, the HSS checks that the user has registration or subscription information in GSM/UMTS CS and EPS network, and sends inquiry message to MME, wherein the inquiry message includes the calling information such as calling number and service type;
1104, the MME judges the UE is in the active state (may have ongoing IP services), or in the idle state and the policy of the idle state is to inquire the user or to determine whether the call performs CS fallback according to the fallback policy set by the user. The MME forwards the inquiry message to the UE;
1105, the UE displays the inquiry message to the user, and waits for the user to respond. The user allows establishing the call or the UE determines that the call performs CS fallback according to the policy pre-configured by the user and stored in the UE. Then the UE sends response message to the MME, wherein the response message includes the information that call is allowed;
1106, the MME forwards the response message to the HSS;
1107-1109, after receiving the response message, the HSS obtains the roaming number from the VLR in which the user is located, and forwards the roaming number to the GMSC;
1110-1113, the GMSC analyzes the roaming number, and routes the call to the MSCNLR. Subsequently, the call is established according to the existing technology as shown in Fig.3. What is different from the prior art is that the UE does not prompt the user any more if the UE judges that the user has been prompted already in 1105, for avoiding that the user is prompted twice in one call procedure.

Fig.12 shows the flow that the MME forwards corresponding message to the UE, the user refuses to answer the call or the UE determines that the call does not perform CS fallback according to the policy pre-configured by the user, when the UE is in the active state or idle state, the flow comprises 1201-1208 as follows:
1201-1202, the GMSC receives an Initial Address Message (namely, incoming call request), and retrieves routing information from HSS. The request message at present has already included the calling number and the service type information; wherein the calling party of the incoming call request can be any kind of user such as a fixed-network user, mobile user and so on;
1203, the HSS checks that the user has registration or subscription information in GSM/UMTS CS and EPS network, and sends inquiry message to MME, wherein the inquiry message includes the calling information of calling number and service type and so on;
1204, the MME judges the UE is in the active state (may have ongoing IP services), or in the idle state, and the policy of the idle state is to inquire the user or to determine whether the call performs CS fallback according to the fallback policy pre-configured by the user. The MME forwards the inquiry message to the UE;
1205, the UE displays the inquiry message to the user, and waits for the user to respond. The user refuses to answer the call, or the UE determines that the call does not perform the fallback according to the fallback policy pre-configured by the user. The UE sends response message to the MME, wherein the response message includes the information that the call is refused;
1206, the MME forwards the response message to the HSS;
1207, after receiving the response message, the HSS sends routing information failure response to the GMSC;
1208, the GMSC initiates the call release flow to release the present call.

### The second method embodiment

According to the embodiment of the present invention, the present invention provides a method for controlling CS fallback which is used in a scenario that a calling UE initiates a call to a called UE which is in an EPS network.

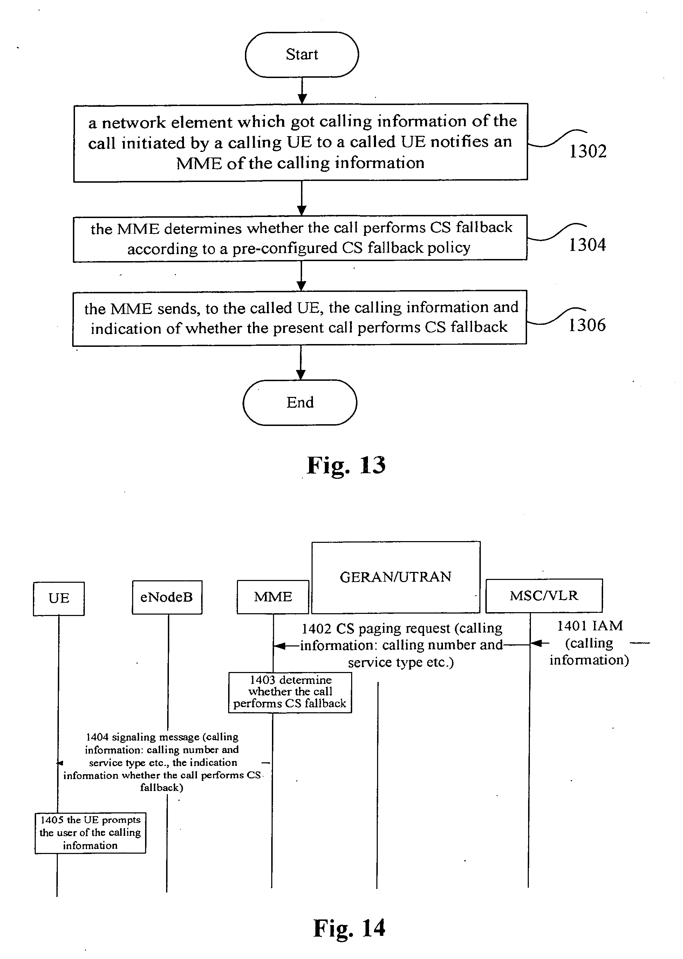

Fig.13 is a flowchart of the method for controlling CS fallback according to the second method embodiment of the present invention. As shown in Fig.13, the method for controlling CS fallback according to the present embodiment comprises 1302-1306 as follows:
1302, a network element which got calling information of a call initiated by a calling UE to a called UE notifies MME of the calling information;
1304, the MME determines whether the call performs CS fallback according to a pre-configured CS fallback policy;
1306, the MME sends, to the called UE, the calling information and indication information of whether the present call performs CS fallback.

In one aspect, in the case that the network element is a MSCNLR, the MSC/VLR notifies the MME of the calling information by including the calling information in a CS domain paging message of Gs interface.

In another aspect, in the case that the network element is a HSS, the HSS notifies the MME of the calling information by including the calling information in interaction information between the HSS and the MME.

In addition, the calling information may comprise: calling UE number, service type of the call.

Fig.14, Fig.15 and Fig.16 show when the MSCNLR is used to notify the calling information, the MME determines whether the call performs CS fallback, and the MME determines whether the call performs CS fallback according to the CS fallback policy pre-configured in the MME by the user.

Fig.14 is a brief processing flow in the case that the MSC/VLR is used to notify the calling information. The drawing and the flow description thereafter show the process how the user determines the call performs CS fallback and subsequent call release flow. As shown in Fig.14, the flow mainly comprises 1401-1405 as follows:
1401, the UE accesses EPS network; Gs association has been established between MME and MSCNLR. The user of the UE has a call, and the user is a called user. The MSCNLR receives an Initial Address Message (namely, incoming call request) of the call, wherein the Initial Address Message includes the calling information (calling number and service type and so on). The calling party of the incoming call request may be any kind of user such as fixed-network user, mobile user and so on;
1402, the MSCNLR receives the incoming call request, and starts to page the UE. According to the Gs association information stored in the VLR, the MSCNLR sends a CS paging request to the MME. New parameters need to be added in the CS paging request to represent the present calling information: the calling number and the service type;
1403, upon receiving the CS paging request, the MME determines whether the present call needs to perform CS fallback according to the stored CS fallback policy which is pre-configured by the user and the present calling information. If the present call satisfies the fallback policy, CS fallback is required to be performed; otherwise CS fallback is not required to be performed.
1404, the MME transmits the calling information and the information of whether the present call performs CS fallback to the UE. The transmission mode can be represented by newly adding a dedicated singling message, or adding new parameters in existing signaling message (calling number and service type, whether the call performs CS fallback, and so on);
1405, the UE receives the message, and determines whether the call performs CS fallback. If not, the UE prompts the user of the present calling information; otherwise the UE does not prompt the user.

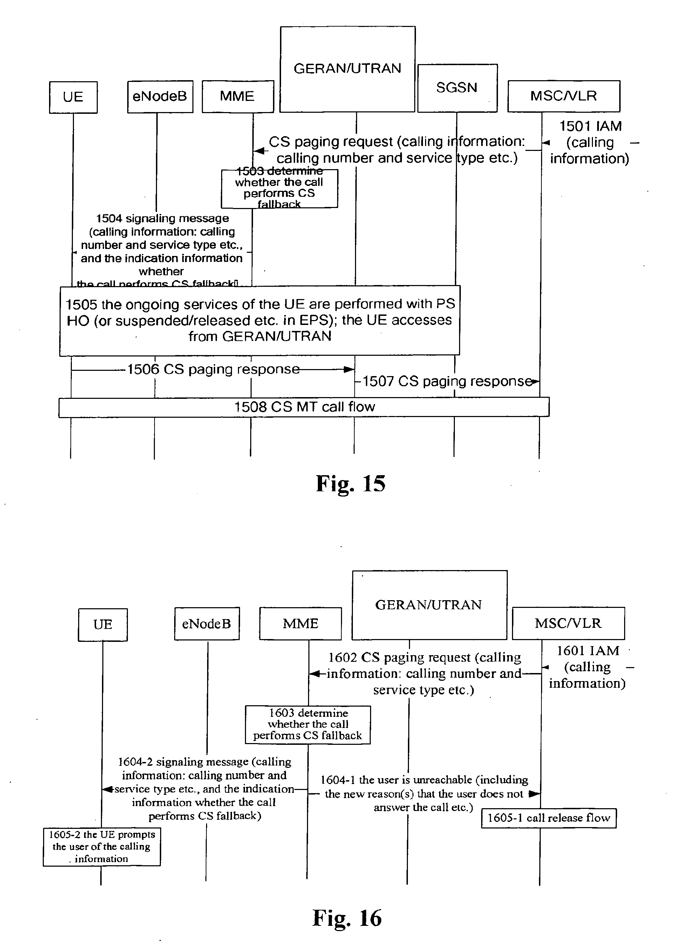

Fig.15 shows the signaling flow that the calling information (calling number and service type) is transmitted from MSC/VLR to MME, and between the MME and the UE subsequently, in the case that the MSC/VLR is used to notify the calling information and the MME determines that the call performs CS fallback. As shown in Fig.15, the flow specifically comprises 1501-1508 as follows:
1501-1504 are the same as the above-mentioned 1401-1404, and thus will not be described here any more;
1505, the UE or the MME or the eNodeB triggers the call CS fallback flow, and performs the fallback according to call CS fallback method (e.g. the CS fallback methods as shown in Fig.4 and Fig.5). After the fallback is completed, the UE accesses the GERAN/UTRAN network;
1506, the UE sends message to the GERAN/UTRAN, wherein the message includes the CS paging response message;
1507, the GERAN/UTRAN sends message to the MSC/VLR, wherein the message includes the CS paging response message;
1508, upon receiving the CS paging response message, the MSC/VLR starts to perform CS mobile terminating call flow.

Fig.16 is a signaling flow in the case that the MSCNLR is used to notify the calling information and the MME determines that the call does not perform CS fallback. The drawing and the flow description thereafter show the completion of the process that the user determines that the call does not perform CS fallback and the subsequent call release flow. As shown in Fig.16. the flow specifically comprises 1601-1605 as follows:
1601-1603 are the same as the above-mentioned 1401-1403, and thus will not be described here any more;
1604, 1605-1 and 1604-2, 1605-2 can be executed in parallel or in sequence:
   1604-1, the MME sends message to the MSCNLR. It may be existing message of Gs interface "the user is unreachable" including a newly added reason which represents the user does not want to answer the present call, or a new message which represents CS fallback is rejected and the call will be released. Or the MME does not send any message to the MSC/VLR, and the MSCNLR releases the call after a certain amount of time has passed;
   1605-1, the MSCNLR receives the message, and starts to perform call release flow;
   1604-2, the MME transmits the present calling information and the information of whether the present call performs CS fallback to the UE. The transmission mode can be represented by newly adding a dedicated singling message, or adding new parameters in existing signaling message (wherein the calling information comprises calling number and service type, whether the call performs CS fallback, and so on);
   1605-2, the UE receives the message and prompts the user of the present call.

Fig.14, Fig.15 and Fig.16 show the case that the MSCNLR forwards the calling information. However, as mentioned above, the calling information can also be forwarded by the HSS, wherein the process of forwarding the calling information is similar to the processing process in the case that the HSS forwards the calling information as shown in Fig.11 and Fig.12. The sequent processes can also adopt the sequent processes as shown in Fig.11, 12, 14, 15 and 16, all of these will not be repeated any more here.

### System embodiment

According to the embodiment of the present invention, the present invention provides a system for controlling CS fallback which is used in a scenario that a calling UE initiates a call to a called UE which is in an EPS network.

The system for controlling CS fallback can be realized through the architecture as shown in Fig.1. As shown in Fig.1, the system for controlling CS fallback according to the embodiment of the present invention comprises an MSCNLR 108, an HSS 106, an MME 105, and a called UE 101. The network elements will be detailed hereafter:
The MSC/VLR 108 is configured to notify the MME 105 of the calling information by including calling information of the call initiated from the calling UE to the called UE 101 in a CS domain paging message of Gs interface; the HSS 106 is configured to notify the MME 105 of the calling information by including the calling information in interaction information between the HSS 106 and the MME 105; the MME 105 is configured to notify the called UE 101 of the calling information, to determine whether the call performs CS fallback according to a pre-configured CS fallback policy, and to send indication information of whether the present call performs CS fallback to the called UE 101; or to determine whether to perform CS fallback according to an indication from the called UE 101 of whether the call performs CS fallback; and the called UE 101 is configured to determine, in the case that the MME 105 does not determine whether the call performs CS fallback, whether the call performs CS fallback according to CS fallback policy or according to whether the user of the called UE 101 answers the call.
   Wherein, the calling information may comprise: the calling UE number, the service type of the call. The call fallback policy may be set in the MME and/or the called UE. That is to say, the call CS fallback policy can be set in the MME and the UE, and can also be set in the MME or in the UE. Furthermore, the MME 105 determines whether the call performs the fallback or not according to the calling fallback policy set in the MME; the UE 101 determines whether the call performs fallback or not according to the fallback policy set in the UE or according to whether the user answers the call or not.

### Apparatus embodiment

According to the embodiment of the present invention, the present invention provides an apparatus for controlling CS fallback which is used in a scenario that a calling UE initiates a call to a called UE which is in an EPS network.

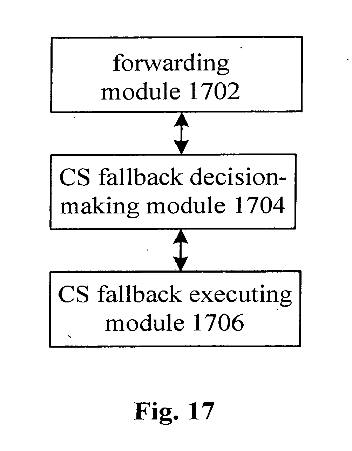

Fig.17 is a block diagram of the apparatus for controlling CS fallback according to the apparatus embodiment of the present invention. As shown in Fig.17, the apparatus for controlling CS fallback according to the embodiment comprises a forwarding module 1702, a CS fallback decision-making module 1704, and a CS fallback executing module 1706 which will be detailed hereafter:
The forwarding module 1702 is configured to notify an MME of calling information of the call initiated by the calling UE to the called UE, and forward the calling information from the MME to the called UE; the CS fallback decision-making module 1704 in which a CS fallback policy is set, is configured to determine whether the call performs CS fallback according to the CS fallback policy or according to whether the user of the called UE answers the call; the CS fallback executing module 1706 is configured to execute the CS fallback according to the decision of the CS fallback decision-making module 1704
Wherein, the forwarding module 1702 may be located in network element which got the calling information and/or in the MME. Furthermore, the network element comprises the MSCNLR and/or the HSS.

In addition, the CS fallback decision-making module 1704 is located in the called UE and/or the MME.

All in all, by applying the solution of the present invention, the ongoing calling CS fallback can be controlled by the user which is a called party and is in EPS network, therefore the usability of the EPS network service is ensured, the satisfaction degree of the user is advanced, and the invalid occupancy of the GSM/UMTS network resource is reduced.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A method for controlling Circuit Switched fallback, CS fallback, which is used in scenarios that a calling User Equipment, UE, initiates a call to a called UE, wherein the called UE is in Evolved Packet domain System, EPS, network, **characterized in that** the method comprises:
network element in the CS domain which got calling information of the present call notifying Mobility Management Entity, MME, of the calling information;
the MME notifying the called UE of the calling information;
the called UE determining whether the call performs CS fallback according to whether the user answers the call or according to pre-configured CS fallback policy.

2. The controlling method according to Claim 1, **characterized in that** in the case that the network element is a Mobile Switching Center/Visitor Location Register, MSC/VLR, the MSCNLR notifies the MME of the calling information by including the calling information in a CS paging message of Gs interface.

3. The controlling method according to Claim 1, **characterized in that** in the case that the network element is a Home Subscriber Server, HSS, the HSS notifies the MME of the calling information by including the calling information in interaction information between HSS and MME.

4. The controlling method according to Claim 1, **characterized in that** in the case that the called UE determines that the call performs the CS fallback, the method further comprises:
the called UE sending indication information for allowing the call to perform CS fallback to a fallback trigger network element which can trigger the CS fallback, so that the CS fallback can be performed, wherein the fallback trigger network element comprises the MME, Evolved Node B, eNodeB.

5. The controlling method according to Claim 1, **characterized in that** in the case that the called UE determines that the call does not perform CS fallback, the method further comprises:
the called UE sending indication for the call not performing CS fallback to the MME;
the MME returning the reason that the called UE does not answer the call to the network element, or not returning any information to the network element.

6. The controlling method according to Claim 1, **characterized in that** in the case that the called UE determines that the call dose not perform the CS fallback according to the pre-configured CS fallback policy, the method further comprises:
the called UE prompting the user to select whether the call performs the CS fallback.

7. The controlling method according to Claim 1, **characterized in that** the called UE directly prompts the user whether the call performs CS fallback.

8. The controlling method according to Claim 6 or Claim 7, **characterized in that** in the case that the user selects that the call performs CS fallback, the method further comprises:
after CS fallback is completed, the called UE not prompting the user to answer the call.

9. The controlling method according to any one of Claims 1-7, **characterized in that** the calling information comprises: calling UE number, service type of the call.

10. A method for controlling Circuit Switched fallback, CS fallback, which is used in scenarios that a calling User Equipment, UE, initiates a call to a called UE, wherein the called UE is in an Evolved Packet domain System, EPS, network, **characterized in that**, the method comprises:
network element in CS domain which got calling information of the present call notifying Mobility Management Entity, MME, of the calling information;
the MME determining whether the call performs CS fallback according to pre-configured CS fallback policy;
the MME sending, to the called UE, the calling information and indication information of whether the present call performs CS fallback.

11. The controlling method according to Claim 10, **characterized in that** in the case that the network element is a Mobile Switching Center/Visitor Location Register, MSC/VLR, the MSC/VLR notifies the MME of the calling information by including the calling information in a CS paging message of Gs interface.

12. The controlling method according to Claim 10, **characterized in that** in the case that the network element is a Home Subscriber Server, HSS, the HSS notifies the MME of the calling information by including the calling information in interaction information between the HSS and the MME.

13. The controlling method according to any one of Claims 10-12, **characterized in that** the calling information comprises: calling UE number, service type of the call.

14. A system for controlling Circuit Switched fallback, CS fallback, which is used in scenarios that a calling User Equipment, UE, initiates a call to a called UE, wherein the called UE is in an Evolved Packet domain System, EPS, network, **characterized in that** the system comprises:
a Mobile Switching Center/Visitor Location Register, MSC/VLR, configured to notify a Mobility Management Entity, MME, of the calling information by including calling information of the present call in a Circuit Switched, CS, paging message of Gs interface;
a Home Subscriber Server, HSS, configured to notify the MME of the calling information by including the calling information in interaction information between the HSS and the MME;
the MME, configured to notify the called UE of the calling information, to determine whether to perform CS fallback according to pre-configured CS fallback policy, and to send indication information of whether the present call performs CS fallback to the called UE; or to determine whether to perform CS fallback according to an indication from the called UE of whether to perform CS fallback; and
the called UE, configured to determine, in the case that the MME does not determine whether to perform CS fallback, whether to perform CS fallback according to CS fallback
policy or according to whether the user of the called UE answers the call.

15. The controlling system according to Claim 14, **characterized in that** the calling fallback policy is set in the MME and/or the called UE.

16. An apparatus for controlling Circuit Switched fallback, CS fallback, which is used in scenarios that a calling User Equipment, UE, initiates a call to a called UE, wherein the called UE is in an Evolved Packet domain System, EPS, network, **characterized in that** the apparatus comprises:
a forwarding module, configured to notify a Mobility Management Entity, MME, of calling information of the present call, and forward the calling information from the MME to the called UE;
a CS fallback decision-making module in which a CS fallback policy is set, configured to determine whether the call performs CS fallback according to the CS fallback policy or according to whether the user of the called UE answers the call;
a CS fallback executing module, configured to execute CS fallback according to the decision of the CS fallback decision-making module.

17. The controlling apparatus according to Claim 16, **characterized in that** the forwarding module is located in network element which got the calling information and/or in the MME.

18. The controlling apparatus according to Claim 17, **characterized in that** the network element comprises a Mobile Switching Center/Visitor Location Register, MSC/VLR, and/or a Home Subscriber Server, HSS.

19. The controlling apparatus according to Claim 16, **characterized in that** the CS fallback decision-making module is located in the called UE and/or the MME.
